# EUROPEAN PATENT APPLICATION

(11) **EP 4 801 055 A1**
(43) Date of publication of application: **02.09.2026**
(21) Application number: 24896385.2
(22) Date of filing: 21.11.2024
(51) Int. Cl.: H04N 23/75, H04N 23/76, G06T 7/11, H04N 23/60

(54) **HIGH-DYNAMIC-RANGE IMAGING METHOD, AND IMAGING SYSTEM**

(30) Priority: 27.11.2023 CN 202311614303
(71) Applicant: Huawei Technologies Co., Ltd., Shenzhen, Guangdong 518129 (CN); Tsinghua University, Beijing 100084 (CN)
(72) Inventor: CHEN, Hongwei, Beijing 100084 (CN); HE, Yutong, Beijing 100084 (CN); LIANG, Yu, Beijing 100084 (CN); DONG, Xiaowen, Shenzhen, Guangdong 518129 (CN); LI, Jingwei, Shenzhen, Guangdong 518129 (CN); NIU, Xinxiang, Shenzhen, Guangdong 518129 (CN)
(74) Representative: Körber, Martin Hans
(86) International application number: PCT/CN2024/133375
(87) International publication number: WO 2025/113294

(57) **Abstract**

This application provides a high dynamic range imaging method and an imaging system. The method includes: capturing a plurality of first images in a photographed region; determining a target region based on the plurality of first images, where the target region is a part of the photographed region, and luminance of the target region reaches a threshold; and capturing a second image in the photographed region, where during imaging of the second image, light intensity of an optical signal from the target region is attenuated. The imaging system includes an image sensor, a processing module, a modulation module, and a lens group. The method and the imaging system in this application can effectively perform single-frame high dynamic range imaging.

## Description

This application claims priority to Chinese Patent Application No. 202311614303.8, filed with the China National Intellectual Property Administration on November 27, 2023 and entitled "HIGH DYNAMIC RANGE IMAGING METHOD AND IMAGING SYSTEM", which is incorporated herein by reference in its entirety.

### TECHNICAL FIELD

This application relates to the field of machine vision, and more specifically, to a high dynamic range imaging method and an imaging system.

### BACKGROUND

High dynamic range (high dynamic range, HDR) imaging is a technology used to capture motion scenes with wide luminance ranges. Because a dynamic range of a photosensitive element of a camera is limited, according to a conventional imaging method, highlight details and shadow details usually cannot be captured at the same time. However, the HDR imaging can present more details and richer colors by capturing a wider luminance range under single exposure.

When multi-frame exposure fusion is applied to the motion scenes, motion blurring and camera shaking make it difficult to align a plurality of images, resulting in artifacts and performance degradation in high dynamic range reconstruction of the motion scenes. As a result, an image cannot be clearly presented or a moving object cannot be identified.

When a neuromorphic camera is used to perform HDR imaging in the motion scene, fusion with a common digital image captured by a conventional frame image-based camera is required. Due to reasons such as camera lens distortion and different fields of view of two sensors, in some cases, in comparison with a multi-frame fusion algorithm, the neuromorphic camera has a poorer imaging effect and higher costs.

### SUMMARY

This application provides a high dynamic range imaging method and an imaging system, to effectively perform high dynamic range imaging.

According to a first aspect, an embodiment of this application provides a high dynamic range imaging method, including: capturing a plurality of first images in a photographed region; determining a target region based on the plurality of first images, where the target region is a part of the photographed region, and luminance of the target region reaches a threshold; and capturing a second image in the photographed region, where during imaging of the second image, light intensity of an optical signal from the target region is attenuated.

According to the high dynamic range imaging method in this embodiment of this application, the light intensity is attenuated based on the target region, so that a single frame of image captured once has high definition and moderate luminance, and high dynamic range imaging can be effectively performed. The method is applicable to a high-speed imaging scene of a moving object.

In a possible implementation of the first aspect, the target region includes at least a part of a moving object, and luminance of the at least a part of the moving object reaches the threshold.

In a possible implementation of the first aspect, capturing the second image in the photographed region includes: determining an optical mask based on a pixel corresponding to the photographed region and a pixel corresponding to the target region; modulating an optical signal from the photographed region based on the optical mask; and obtaining the second image through imaging based on a modulated optical signal.

The optical mask is used to modulate the optical signal from the photographed region, so that imaging of the photographed region has appropriate luminance, and implementation complexity is low.

In a possible implementation of the first aspect, modulating the optical signal from the photographed region based on the optical mask includes: controlling, based on the optical mask, a spatial light modulator to modulate the optical signal from the target region, to attenuate the light intensity of the optical signal from the target region.

In a possible implementation of the first aspect, the optical mask is a binary pixel map, and a value of a pixel of the optical mask indicates whether the light intensity is attenuated.

The optical mask in the form of the binary pixel map may keep a luminance ratio between pixels corresponding to the target region unchanged, to facilitate subsequent processing.

In a possible implementation of the first aspect, the optical mask is a grayscale bitmap, and a value of a pixel of the optical mask indicates a degree of light intensity attenuation.

The optical mask in the form of the grayscale bitmap may make pixels corresponding to the target region have similar luminance, to facilitate subsequent processing.

In a possible implementation of the first aspect, determining the target region based on the plurality of first images includes: predicting, based on the plurality of first images, a moving object region corresponding to the moving object; and determining the target region based on an overexposed region in the moving object region, where luminance of the overexposed region reaches the threshold.

In a possible implementation of the first aspect, predicting, based on the plurality of first images, the moving object region corresponding to the moving object includes: determining a feature of the moving object based on an image of the moving object in the plurality of first images; and determining the moving object region based on the feature of the moving object.

In a possible implementation of the first aspect, the plurality of first images are a plurality of frames of images that are consecutively captured.

The plurality of consecutive first images may more accurately reflect a motion trajectory of the moving object in the photographed region.

In a possible implementation of the first aspect, the second image is captured in a next frame after the plurality of first images are captured.

In this case, a region in which the moving object is located exhibits a high degree of overlap with the moving object region in a predicted image, and the obtained second image has high definition and moderate luminance.

In a possible implementation of the first aspect, the method further includes: performing image recognition based on the second image.

The second image obtained in the manner in this embodiment of this application has high quality. Therefore, image recognition accuracy can be improved.

According to a second aspect, an embodiment of this application provides an imaging system, including: an image sensor, configured to capture a plurality of first images in a photographed region; a processing module, configured to determine a target region based on the plurality of first images, where the target region is a part of the photographed region, and luminance of the target region reaches a threshold; and a modulation module, configured to modulate an optical signal from the photographed region, to attenuate light intensity of an optical signal from the target region. The image sensor is further configured to capture a second image in the photographed region based on a modulated optical signal.

In a possible implementation of the second aspect, the target region includes at least a part of a moving object, and luminance of the at least a part of the moving object reaches the threshold.

In a possible implementation of the second aspect, the modulation module includes at least one of a digital micromirror device, a liquid crystal light modulator, or an acoustic-optic modulator.

In a possible implementation of the second aspect, the processing module is configured to determine an optical mask based on a pixel corresponding to the photographed region and a pixel corresponding to the target region; and the modulation module is configured to modulate the optical signal from the photographed region based on the optical mask.

In a possible implementation of the second aspect, the optical mask is a binary pixel map, and a value of a pixel of the optical mask indicates whether the light intensity is attenuated.

In a possible implementation of the second aspect, the optical mask is a grayscale bitmap, and a value of a pixel of the optical mask indicates a degree of light intensity attenuation.

In a possible implementation of the second aspect, the processing module is configured to: predict, based on the plurality of first images, a moving object region corresponding to the moving object; and determine the target region based on an overexposed region in the moving object region, where luminance of the overexposed region reaches the threshold.

In a possible implementation of the second aspect, the processing module is configured to: determine a feature of the moving object based on an image of the moving object in the plurality of first images; and determine the moving object region based on the feature of the moving object.

In a possible implementation of the second aspect, the plurality of first images are a plurality of frames of images that are consecutively captured.

In a possible implementation of the second aspect, the second image is captured in a next frame after the plurality of first images are captured.

In a possible implementation of the second aspect, the imaging system further includes a lens group, configured to receive the optical signal from the photographed region, and transmit the optical signal from the photographed region to the image sensor through the modulation module.

In a possible implementation of the second aspect, the processing module is further configured to perform image recognition based on the second image.

According to a third aspect, an embodiment of this application provides a camera lens, including the imaging system according to any one of the implementations of the second aspect.

According to a fourth aspect, an embodiment of this application provides a terminal, including the imaging system according to any one of the implementations of the second aspect.

According to a fifth aspect, an embodiment of this application provides a vehicle, including the imaging system according to any one of the implementations of the second aspect.

According to a sixth aspect, an embodiment of this application provides a computer-readable storage medium, including computer program instructions. When the computer program instructions are executed by an imaging system, the imaging system performs the method according to any one of the implementations of the first aspect.

### BRIEF DESCRIPTION OF DRAWINGS

FIG. 1 is a block diagram of an imaging system according to an embodiment of this application;
FIG. 2 is a schematic flowchart of a high dynamic range imaging method according to an embodiment of this application;
FIG. 3 is a diagram of an imaging system according to an embodiment of this application;
FIG. 4 is a block diagram of an imaging system according to an embodiment of this application; and
FIG. 5 is a block diagram of a controller according to an embodiment of this application.

### DESCRIPTION OF EMBODIMENTS

Aspects, embodiments, or features are presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new hardware functional module emerges, the technical solutions provided in embodiments of this application are also applicable to a similar technical problem.

The following briefly describes common technical terms in this field.

PredNet is a neural network model based on deep learning and is used for video sequence prediction and processing.

An automatic license plate recognition network (automatic license plate recognition network, ALPR Net) is a deep learning network used to automatically recognize and extract license plate information. The automatic license plate recognition network can accurately detect and recognize license plate numbers from a vehicle image by using image processing and pattern recognition technologies.

In a typical high dynamic range (high dynamic range, HDR) imaging method based on multi-frame exposure fusion, a camera or a camcorder is first used to photograph a series of images with different exposure settings such as overexposure, normal exposure, and underexposure, so that the images have different luminance, and details of regions with different luminance can be captured. Then, image alignment is performed. Subsequently, exposure fusion is performed, and optimal luminance details of all the images are extracted by using a common image processing algorithm. Finally, tone mapping is performed, and adjustment is performed according to different tone mapping algorithms to maintain details and contrast of the images.

When the conventional HDR imaging method based on multi-frame exposure fusion is applied to motion scenes, artifacts, blurring, and the like become severe, casing application limitations.

In view of this, embodiments of this application provide a high dynamic range imaging method. A single-frame target digital image obtained by using the method has a high dynamic range, high definition, and moderate luminance.

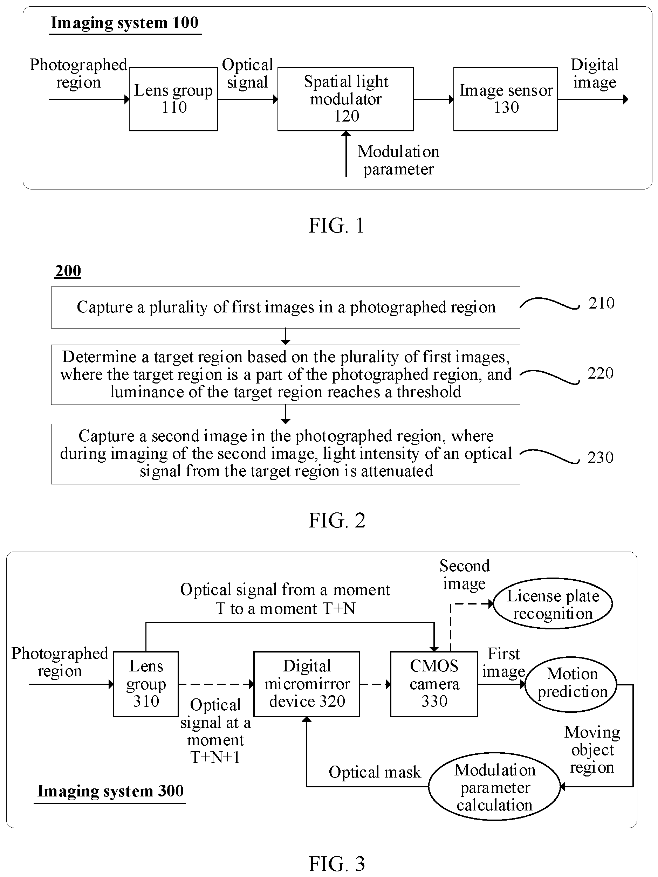

In an embodiment, the foregoing method is implemented by an imaging system. In an imaging system 100 shown in FIG. 1, the imaging system 100 may include a lens group 110, a spatial light modulator (spatial light modulator, SLM) 120, and an image sensor 130. A working process of the imaging system 100 is as follows. First, the lens group 110 captures an optical signal from a photographed region a plurality of times. Then, the spatial light modulator 120 modulates the optical signal, and the image sensor 130 converts a modulated optical signal into a digital image. Subsequently, data processing is performed on the digital image. During data processing, an optimized modulation parameter may be input to the spatial light modulator 120, to improve an imaging effect of the image sensor 130. The imaging system 100 may further determine an output image based on a subsequently photographed digital image. The image sensor 130 may be a complementary metal-oxide-semiconductor (complementary metal-oxide-semiconductor, CMOS) camera, a charge-coupled device (charge-coupled device, CCD) camera, or an image sensor of another type. This is not limited in embodiments of this application.

The spatial light modulator 120 is an optical device, and is configured to modulate a phase, an amplitude, or a polarization state of a light wave, to precisely control a light field. The spatial light modulator usually includes an array of adjustable optical elements, and each element corresponds to one unit of the light wave. States of these elements may be adjusted as required to change a property of the light wave. For example, the spatial light modulator 120 may use a digital micromirror device (digital micromirror device, DMD). The DMD includes many tiny mirrors, and each mirror is referred to as a micromirror. These micromirrors are arranged in a form of a two-dimensional array, and a size of each micromirror is usually about several micrometers. A light source illuminates the DMD. Each micromirror may independently switch between two states, which are usually reflection toward an optical axis and reflection far away from the optical axis. The two states respectively correspond to digital signals 0 and 1. A digital control circuit is responsible for controlling a state of each micromirror. This control process is at a high speed, is precise, and is usually completed in microseconds. The DMD may perform phase modulation. When the micromirror is adjusted to perform reflection toward the optical axis, a phase of a light wave changes. When the micromirror performs reflection away from the optical axis, a phase remains unchanged. The phase of the light wave may be modulated by forming a specific reflection mode for the micromirror device. Amplitude modulation may be further implemented in a manner similar to that of adjusting a reflection angle of the micromirror, and light wave modulation may be further performed. Phase modulation and amplitude modulation are comprehensively considered, to modulate an input light wave into an output light wave having a specific spatial characteristic. Reflection angles of the two states of the micromirror, a position relationship between the DMD and the optical axis, and the like may all be set as required.

Another common spatial light modulator is a liquid crystal light modulator. A liquid crystal is a material that can change a polarization state of light by adjusting a molecular orientation of the liquid crystal. The liquid crystal light modulator usually includes a liquid crystal layer, a transparent electrode, and a control circuit. The control circuit is configured to control a state of each unit. These circuits can change a state of the liquid crystal at a very fast speed as required, to implement real-time modulation of the light field. The liquid crystal light modulator may perform phase modulation, to implement precise phase adjustment on a light wave by changing a phase of the light wave that is obtained when the light wave passes through the liquid crystal layer. This may be implemented by changing the molecular orientation of the liquid crystal or by introducing an electric field into the liquid crystal layer. Further, amplitude modulation may be performed to modulate transparency of the liquid crystal, so as to change an amplitude of the light wave, and this is usually implemented by adjusting the molecular orientation of the liquid crystal to change a transmission degree of light. Furthermore, polarization modulation may be performed, where a polarization direction of the light is changed by controlling the molecular orientation of the liquid crystal.

In addition, an acoustic-optic modulator may be further used to change a refractive index of a medium by introducing a sound wave into an optical path, so as to affect an amplitude of the light.

In addition, there is another type of spatial light modulator. In any type of spatial light modulator, a tunable optical filter can be introduced, and amplitude modulation of the light wave is implemented by adjusting intensity of transmitted light. A type of the spatial light modulator is not limited in this application.

The modulation parameters shown in FIG. 1 may be modulation parameters of various modulation schemes such as phase modulation, amplitude modulation, polarization modulation, and wavelength modulation. For example, for a liquid crystal spatial light modulator, a molecular orientation of a liquid crystal may be adjusted by applying an electric field, to change a phase of a light wave that is obtained when the light wave passes through a liquid crystal layer. A magnitude and form of a voltage may be used as control parameters. Increasing the voltage may cause liquid crystal molecules to be rearranged and the phase to be changed. Further, an amplitude of the light wave may be adjusted by changing the electric field, and the magnitude and form of the voltage may be used as control parameters. For the DMD, an input phase modulation parameter is usually a digital pattern, and values of the pattern respectively correspond to different phases or amplitude states. A state of each micromirror is controlled, so that corresponding phase modulation can be introduced into an output light wave. The state of each micromirror is controlled, so that intensity of reflected light can be further adjusted, thereby implementing digital amplitude modulation. Both the electric field and the digital pattern may be referred to as an optical mask. Unless otherwise specified, the digital pattern is referred to as an optical mask in the following.

The technical solutions in embodiments of this application may be applied to various complex lighting scenes, for example, license plate recognition at night, military reconnaissance, underground search and rescue, and mineral exploration. The following descriptions are provided with reference to an imaging method for an imaging system in the field of traffic road surveillance. However, this is not limited in this application. The imaging system in the field of traffic road surveillance is used to recognize license plate information of a moving vehicle under strong vehicle headlight illumination at night.

FIG. 2 is a schematic flowchart of a high dynamic range imaging method 200 according to an embodiment of this application. In the following embodiment, a method for high dynamic range imaging of a moving object is used as an example. However, the method is also effective for high dynamic range imaging of a stationary object. This is not limited in embodiments.

210: Capture a plurality of first images in a photographed region.

When there is a moving object in the photographed region, the moving object may be determined by capturing a plurality of images. For example, in a process in which an imaging system in the field of traffic road surveillance performs license plate recognition on a vehicle in a fixed photographed region, the vehicle is moving in the photographed region. The imaging system captures a plurality of optical image signals in the photographed region, and each optical image signal is converted into a digital image through an image sensor. A plurality of digital images are the plurality of first images.

Optionally, the plurality of first images may be a plurality of frames of images that are consecutively captured. The plurality of consecutive first images may more accurately reflect a motion trajectory of the moving object in the photographed region. In a possible embodiment, operating frequencies of all elements in the imaging system are F. It is assumed that an interval between any two moments is 1/F seconds. In this case, from any moment T to a moment T+N, N+1 consecutive images are obtained through photographing and used as the plurality of first images.

220: Determine a target region based on the plurality of first images, where the target region is a part of the photographed region, and luminance of the target region reaches a threshold.

The method for high dynamic range imaging of the moving object is used as an example. The target region includes at least a part of the moving object, and luminance of the at least a part of the moving object reaches the threshold. A specific threshold depends on the image sensor in the imaging system. This is not limited in this application. An analog electrical signal captured by the image sensor is converted, through an analog-to-digital conversion circuit, into a digital image represented by luminance. For an 8-bit digital image, a value of each pixel ranges from 0 to 255. If a value of a pixel is 255, it indicates that optical signal intensity of a corresponding region reaches saturation. In this case, the threshold of the luminance of the target region may be 255, or may be 245, 250, or the like. Similarly, for a 12-bit digital image, the threshold of the luminance of the target region may be 4095, 4085, 4090, or the like. This is not limited in embodiments.

First, a moving object region corresponding to the moving object is predicted based on the plurality of first images. Specifically, a video prediction algorithm may be executed. For example, a pre-trained PredNet neural network model may be used. The model can identify features such as an edge, a shape, a color, and a motion state of an object in an image, and predict a next frame of image based on object features of a plurality of frames of images. In this embodiment, a feature of the moving object may be determined based on an image of the moving object in the plurality of first images. For example, an object may be a traffic sign, a street tree, a moving vehicle, or the like, and the moving object mainly includes the moving vehicle. An image of the moving vehicle in the plurality of first images may be analyzed, to obtain a feature like a motion state of the moving vehicle.

It should be noted that only a part of the moving vehicle may be located in the photographed region of the imaging system, and the part of the vehicle located in the photographed region of the imaging system may be further divided into a part whose luminance reaches the threshold and a part whose luminance is less than the threshold. In this case, luminance of at least a part of the moving object reaches the threshold.

Further, determining the moving object region based on the feature of the moving object may be, for example, obtaining a predicted image through calculation based on the feature of the moving object. In this embodiment, the predicted image is obtained through calculation based on the feature like the motion state of the moving vehicle. The predicted image includes the image of the moving object, and a region corresponding to the image of the moving object is referred to as the moving object region.

In this embodiment, the target region may be determined based on an overexposed region in the moving object region. Specifically, a region corresponding to a pixel whose luminance reaches the threshold in the predicted image is referred to as the overexposed region. For example, the target region may be a rear section of a vehicle illuminated by strong vehicle headlights. In some possible cases, the overexposed region is a part of the rear section of the vehicle other than a rear windshield, that is, the overexposed region is a part of the moving object region. In some other possible cases, some traffic signs in the photographed region are also illuminated by vehicle headlights, and the overexposed region includes a region in which the traffic sign is located. In this case, the overexposed region in the moving object region is an intersection of the overexposed region and the moving object region.

In addition, in some image processing methods, to facilitate subsequent processing, pixels corresponding to the overexposed region, the moving object region, and the target region are extended to a rectangular pixel array to which these pixels belong. The overexposed region is used as an example. In this case, the overexposed region needs to be determined based on the rectangular pixel array, and a real three-dimensional shape of the overexposed region is not fixed. Sizes and shapes of the overexposed region, the moving object region, and the target region are not limited in embodiments.

230: Capture a second image in the photographed region, where during imaging of the second image, light intensity of an optical signal from the target region is attenuated.

Specifically, an optical mask may be determined based on a pixel corresponding to the photographed region and a pixel corresponding to the target region; an optical signal from the photographed region is modulated based on the optical mask; and then the second image is obtained through imaging based on a modulated optical signal. An imaging system 300 shown in FIG. 3 is used as an example. The imaging system 300 may be configured to implement the method described in 210 and 220, and may further implement, in the following manner, the method described in 230.

The optical mask is used to make imaging of the photographed region have appropriate luminance. The optical mask may be loaded to a digital micromirror device 320 to modulate an optical signal. For example, in this embodiment, based on the optical mask, a state of each micromirror in the digital micromirror device 320 may be controlled, and intensity of reflected light may be adjusted, to implement digital amplitude modulation, and attenuate the light intensity of the optical signal from the target region. This manner has low implementation complexity and controllable costs.

In an embodiment, each micromirror in the digital micromirror device 320 has two states, which may be considered as a binary pixel map. Therefore, when the optical mask is a binary pixel map, an arrangement manner of pixels of the optical mask may be the same as an arrangement manner of micromirrors in the digital micromirror device 320. A value of a pixel of the optical mask indicates whether light intensity at this position is attenuated.

For example, the arrangement manner of the micromirrors in the digital micromirror device 320 is 30720*17280, a quantity of pixels of the optical mask is 30720*17280, and a value of each pixel is 0 or 1. When the value of the pixel of the optical mask is 1, it indicates that a micromirror performs reflection away from an optical axis, and light intensity at this position is attenuated. When the value of the pixel of the optical mask is 0, it indicates that a micromirror performs reflection toward an optical axis, and light intensity at this position is not attenuated. A specific degree of light intensity attenuation depends on a specific position relationship between the optical axis and the digital micromirror device 320. This is not limited in embodiments. In an embodiment, a value of a pixel corresponding to the target region in the optical mask is 1, and a value of a remaining pixel is 0.

The optical mask in the form of the binary pixel map may keep a luminance ratio between pixels corresponding to the target region unchanged, to facilitate subsequent processing.

For another type of spatial light modulator, a tunable optical filter can be introduced, and amplitude modulation of a light wave is implemented by adjusting intensity of transmitted light. For example, a liquid crystal optical filter is selected as the tunable optical filter, a molecular orientation of a liquid crystal of the liquid crystal optical filter is controlled by using an external voltage or electric field, to adjust a transmitted spectral range or transmittance. Field strength distribution of the external electric field may be set based on a ratio of luminance of the pixel corresponding to the target region to the threshold.

In another embodiment, the optical mask may alternatively be a grayscale bitmap. Specifically, each micromirror in the digital micromirror device 320 may be divided into several small regions, so that an arrangement manner of these small regions is the same as an arrangement manner of pixels of the obtained digital image. Then, grayscale of each pixel is modulated by separately controlling reflection states of these small regions. In this case, a plurality of micromirrors in the digital micromirror device 320 form a microarray, which corresponds to a pixel of the obtained digital image. An arrangement manner of pixels of the needed optical mask is the same as an arrangement manner of pixels of a digital image obtained through imaging by a CMOS camera. A value of a pixel of the optical mask indicates a degree of light intensity attenuation at this position.

For example, a quantity of pixels of the digital image obtained through imaging by the CMOS camera in FIG. 3 is 1920*1080, and an arrangement manner of the micromirrors in the digital micromirror device 320 is 30720*17280. The micromirrors in the digital micromirror device 320 may be grouped by 16*16 to form the microarray. A quantity of pixels of the optical mask is 1920*1080, a value of each pixel ranges from 0 to 255, and each pixel corresponds to one microarray. When a value of a pixel is 0, it indicates that all the micromirrors in the microarray perform reflection toward the optical axis, and light intensity of the pixel is not attenuated. When a value of a pixel is 127, it indicates that 127 micromirrors in 256 micromirrors in the corresponding microarray perform reflection away from the optical axis. When a value of a pixel is 255, it indicates that 255 micromirrors in 256 micromirrors in the corresponding microarray perform reflection away from the optical axis, and only one micromirror performs reflection toward the optical axis. The value of the pixel of the optical mask may be set based on a ratio of luminance of the pixel corresponding to the target region to the threshold.

The optical mask in the form of the grayscale bitmap may make pixels corresponding to the target region have similar luminance, to facilitate subsequent processing.

Optionally, the second image may be captured in a next frame after the plurality of first images are captured. In this case, a region in which the moving object is located exhibits a high degree of overlap with the moving object region in a predicted image, and the obtained second image has high definition and moderate luminance. In a possible embodiment, operating frequencies of all elements in the imaging system 300 are F. It is assumed that an interval between any two moments is 1/F seconds, and the plurality of first images are N+1 consecutive images obtained through photographing from any moment T to a moment T+N. In this case, in this embodiment, one image is obtained through photographing at a moment T+N+1 and used as the second image.

In this embodiment, the second image may be input into an automatic license plate recognition network, and image recognition is performed based on the second image to obtain license plate numbers in the second image. A purpose of the second image is not limited in this application. The second image obtained in the manner in this embodiment of this application has high quality. Therefore, image recognition accuracy can be improved.

According to the high dynamic range imaging method in this embodiment of this application, the light intensity is attenuated based on the target region, so that a single frame of image captured once has high definition and moderate luminance, and high dynamic range imaging can be effectively performed. The method is applicable to a high-speed imaging scene of a moving object.

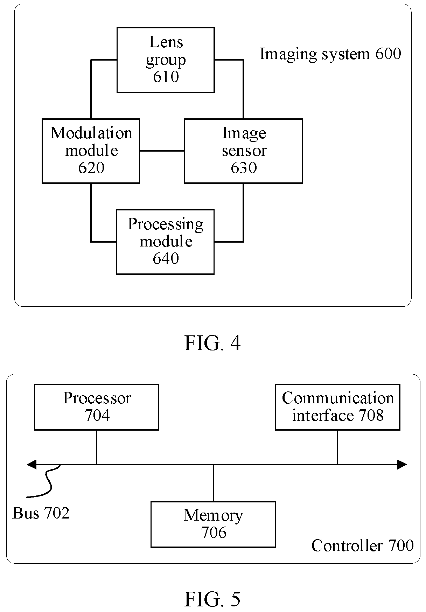

This application further provides an imaging system. The imaging system may perform the method in the foregoing embodiments of this application. FIG. 4 is a diagram of a structure of an imaging system 600 according to an embodiment of this application. The imaging system 600 includes:
an image sensor 630, configured to capture a plurality of first images in a photographed region; and further configured to capture a second image in the photographed region based on a modulated optical signal;
a processing module 640, configured to determine a target region based on the plurality of first images, where the target region is a part of the photographed region, and luminance of the target region reaches a threshold; and further configured to determine an optical mask based on a pixel corresponding to the photographed region and a pixel corresponding to the target region; and
a modulation module 620, configured to modulate an optical signal from the photographed region, to attenuate light intensity of an optical signal from the target region.

The imaging system 600 may further include a lens group 610, configured to receive the optical signal from the photographed region, and transmit the optical signal to the image sensor 630 through the modulation module 620.

The lens group 610, the modulation module 620, and the image sensor 630 may respectively be the lens group 110, the spatial light modulator 120, and the image sensor 130 in FIG. 1, or the lens group 310, the digital micromirror device 320, and the CMOS camera 330 in FIG. 3. The modulation module 620 may alternatively be a liquid crystal spatial light modulator, a grating modulator, an acoustic-optic modulator, or the like, and the image sensor 630 may alternatively be a CCD camera.

In an application scenario of this embodiment, the processing module 640 may be further configured to perform image recognition based on the second image. The second image obtained in the manner in this embodiment of this application has high quality. Therefore, image recognition accuracy can be improved.

A specific implementation of a function performed by each module is described in method embodiments, and details are not described herein again.

The foregoing term "module" may be implemented in the form of software and/or hardware. This is not specifically limited. For example, the "module" may be a software program or a hardware circuit that implements the foregoing functions, or a combination thereof, and may include code run on a computing instance. For example, the processing module may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof. The modulation module may be a programmable hardware functional module like a digital micromirror device, and the image sensor may be a programmable hardware functional module like a CCD camera or a CMOS camera.

Therefore, modules in examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

This application further provides a controller 700. As shown in FIG. 5, the controller 700 includes a processor 704 and a communication interface 708. Further, the controller 700 may include a bus 702 and a memory 706. It should be understood that the bus 702 and the memory 706 are optional. The processor 704, the memory 706, and the communication interface 708 communicate with each other through the bus 702. For example, the controller 700 may be a compute device or a system that is in the compute device and that is configured to implement the method in embodiments of this application. The controller 700 may be any terminal device. It should be understood that quantities of processors and memories in the controller 700 are not limited in this application.

The bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 5. However, it does not mean that there is only one bus or only one type of bus. The bus 704 may include a path for information transmission between components (for example, the memory 706, the processor 704, and the communication interface 708) of the controller 700.

The processor 704 may include any one or more of processors such as a central processing unit (central processing unit, CPU), a graphics processing unit (graphics processing unit, GPU), a micro processor (micro processor, MP), or a digital signal processor (digital signal processor, DSP).

The memory 706 may include a volatile memory (volatile memory), for example, a random access memory (random access memory, RAM). Alternatively, the memory 706 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code, and the processor 704 executes the executable program code to implement a function of the foregoing processing module, so as to generate a high dynamic range image. In other words, the memory 706 stores instructions used for the high dynamic range imaging method.

The communication interface 708 uses a transceiver module, for example, but not limited to, a network interface card or a transceiver, to implement communication between the controller 700 and another device or communication network (for example, a user terminal of an intelligent agent). The communication interface may also be referred to as an interface circuit.

In a possible implementation, the controller 700 is configured to implement a hardware functional module in the intelligent agent.

An embodiment of this application further provides a camera lens. The camera lens includes a hardware functional module of the foregoing imaging system, and can perform the foregoing high dynamic range imaging method. Specific hardware functional module selection is described in the foregoing embodiments by using examples.

An embodiment of this application further provides a terminal. The terminal includes a hardware functional module of the foregoing imaging system, and can perform the foregoing high dynamic range imaging method. The terminal may be a device that has a photographing function, like a smartphone, a smart tablet, an internet of things device, or an industrial control device.

An embodiment of this application further provides a vehicle. The vehicle includes a hardware functional module of the foregoing imaging system, and can perform the foregoing high dynamic range imaging method. The vehicle may be a vehicle that can interact with an electronic device, like a vehicle with an assisted driving function or an autonomous vehicle.

An embodiment of this application further provides a computer program product including instructions. The computer program product may be software or a program product that includes instructions and that is executable on a compute device or be stored in any usable medium. When the computer program product is run on at least one compute device, the at least one compute device is caused to perform the method in embodiments of this application.

An embodiment of this application further provides a computer-readable storage medium. The computer-readable storage medium may be any usable medium that can be stored by a compute device, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a compute device to perform the method in embodiments of this application, or instruct the compute device to perform the method in embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, division into the modules is merely logical function division. During actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A high dynamic range imaging method, comprising:
capturing a plurality of first images in a photographed region;
determining a target region based on the plurality of first images, wherein the target region is a part of the photographed region, and luminance of the target region reaches a threshold; and
capturing a second image in the photographed region, wherein during imaging of the second image, light intensity of an optical signal from the target region is attenuated.

2. The method according to claim 1, wherein the target region comprises at least a part of a moving object, and luminance of the at least a part of the moving object reaches the threshold.

3. The method according to claim 1 or 2, wherein the capturing the second image in the photographed region comprises:
determining an optical mask based on a pixel corresponding to the photographed region and a pixel corresponding to the target region;
modulating an optical signal from the photographed region based on the optical mask; and
obtaining the second image through imaging based on a modulated optical signal.

4. The method according to claim 3, wherein the modulating the optical signal from the photographed region based on the optical mask comprises:
controlling, based on the optical mask, a spatial light modulator to modulate the optical signal from the target region, to attenuate the light intensity of the optical signal from the target region.

5. The method according to claim 3 or 4, wherein the optical mask is a binary pixel map, and a value of a pixel of the optical mask indicates whether the light intensity is attenuated.

6. The method according to claim 3 or 4, wherein the optical mask is a grayscale bitmap, and a value of a pixel of the optical mask indicates a degree of light intensity attenuation.

7. The method according to any one of claims 2 to 6, wherein the determining the target region based on the plurality of first images comprises:
predicting, based on the plurality of first images, a moving object region corresponding to the moving object; and
determining the target region based on an overexposed region in the moving object region, wherein luminance of the overexposed region reaches the threshold.

8. The method according to claim 7, wherein the predicting, based on the plurality of first images, the moving object region corresponding to the moving object comprises:
determining a feature of the moving object based on an image of the moving object in the plurality of first images; and
determining the moving object region based on the feature of the moving object.

9. The method according to any one of claims 1 to 8, wherein the plurality of first images are a plurality of frames of images that are consecutively captured.

10. The method according to any one of claims 1 to 9, wherein the second image is captured in a next frame after the plurality of first images are captured.

11. The method according to any one of claims 1 to 10, wherein the method further comprises:
performing image recognition based on the second image.

12. An imaging system, comprising:
an image sensor, configured to capture a plurality of first images in a photographed region;
a processing module, configured to determine a target region based on the plurality of first images, wherein the target region is a part of the photographed region, and luminance of the target region reaches a threshold; and
a modulation module, configured to modulate an optical signal from the photographed region, to attenuate light intensity of an optical signal from the target region, wherein
the image sensor is further configured to capture a second image in the photographed region based on a modulated optical signal.

13. The imaging system according to claim 12, wherein the target region comprises at least a part of a moving object, and luminance of the at least a part of the moving object reaches the threshold.

14. The imaging system according to claim 12 or 13, wherein the modulation module comprises at least one of a digital micromirror device, a liquid crystal light modulator, or an acoustic-optic modulator.

15. The imaging system according to any one of claims 12 to 14, wherein
the processing module is configured to determine an optical mask based on a pixel corresponding to the photographed region and a pixel corresponding to the target region; and
the modulation module is configured to modulate the optical signal from the photographed region based on the optical mask.

16. The imaging system according to claim 15, wherein the optical mask is a binary pixel map, and a value of a pixel of the optical mask indicates whether the light intensity is attenuated.

17. The imaging system according to claim 15, wherein the optical mask is a grayscale bitmap, and a value of a pixel of the optical mask indicates a degree of light intensity attenuation.

18. The imaging system according to any one of claims 13 to 17, wherein the processing module is configured to:
predict, based on the plurality of first images, a moving object region corresponding to the moving object; and
determine the target region based on an overexposed region in the moving object region, wherein luminance of the overexposed region reaches the threshold.

19. The imaging system according to claim 18, wherein the processing module is configured to:
determine a feature of the moving object based on an image of the moving object in the plurality of first images; and
determine the moving object region based on the feature of the moving object.

20. The imaging system according to any one of claims 12 to 19, wherein the plurality of first images are a plurality of frames of images that are consecutively captured.

21. The imaging system according to any one of claims 12 to 20, wherein the second image is captured in a next frame after the plurality of first images are captured.

22. The imaging system according to any one of claims 12 to 21, further comprising:
a lens group, configured to receive the optical signal from the photographed region, and transmit the optical signal from the photographed region to the image sensor through the modulation module.

23. The imaging system according to any one of claims 12 to 22, wherein the processing module is further configured to perform image recognition based on the second image.

24. A camera lens, comprising the imaging system according to any one of claims 12 to 23.

25. A terminal, comprising the imaging system according to any one of claims 12 to 23.

26. A vehicle, comprising the imaging system according to any one of claims 12 to 23.
